# EUROPEAN PATENT APPLICATION

(11) **EP 4 571 901 A1**
(43) Date of publication of application: **18.06.2025**
(21) Application number: 24217888.7
(22) Date of filing: 05.12.2024
(51) Int. Cl.: H01M 8/0247, H01M 8/0271, H01M 8/0276, H01M 8/2483

(54) **BIPOLAR PLATE ALIGNMENT SYSTEM**

(30) Priority: 15.12.2023 US 202363610946 P
(71) Applicant: Hydrogenics Corporation, Mississauga, ON L5T 2N6 (CA)
(72) Inventor: Sinanan, Anson, Brampton, L7A 4N2 (CA); Shivastava, Akhil, Brampton, L7A 4N2 (CA); Thirunavukkarasu, Naveen Prakash, Lasalle, N9J 2Z7 (CA); Jiang, Yunsheng, Mississauga, L4Z 0C6 (CA); Graziano, Antimo, Aurora, L4G 3M2 (CA); Jayasankar, Barathram, Mississauga, L5J 4J9 (CA); Shrivastava, Udit N., Indianapolis, 46204 (US); Harinath, Arvind V., Columbus, 47201 (US)
(74) Representative: Marks & Clerk Cummins

(57) **Abstract**

A bipolar plate alignment system includes a bipolar plate, a gasket seal, and an adhesive film. The bipolar plate is formed to include a seal groove and a plate alignment feature extending outwardly from a perimeter of the bipolar plate. The gasket seal is sized to fit within the seal groove and is formed to include a seal alignment feature extending outwardly from a perimeter of the gasket seal.

## Description

### CROSS-REFERENCE TO RELATED APPLICATIONS

This nonprovisional application claims the benefit and priority, under 35 U.S.C. § 119(e) and any other applicable laws or statues, to U.S. Provisional Patent Application Serial No. 63/610,946 filed on December 15, 2023, the entire disclosure of which is hereby expressly incorporated herein by reference.

### TECHNICAL FIELD

The present disclosure relates to bipolar plate alignment systems and methods of using bipolar plate alignment systems to align a gasket seal with a bipolar plate.

### SUMMARY

Embodiments of the present disclosure are included to meet these and other needs.

In one aspect described herein, a bipolar plate alignment system comprises a bipolar plate, a gasket seal, and an adhesive film. The bipolar plate is formed to include a seal groove defined in a first side of the bipolar plate and a plurality of plate alignment features extending outwardly from a perimeter of the bipolar plate. Each of the plurality of plate alignment features is formed to include a hole extending therethrough. The gasket seal is sized to fit within the seal groove of the bipolar plate to seal reactants within an active area of the bipolar plate. The gasket seal is formed to include a plurality of seal alignment features extending outwardly from a perimeter of the gasket seal. Each of the plurality of seal alignment features is formed to include a hole extending therethrough. The adhesive film is coupled to the gasket seal and the seal groove. The adhesive film is formed to include a plurality of film alignment features extending outwardly from a perimeter of the adhesive film. Each of the plurality of film alignment features is formed to include a hole extending therethrough. The hole formed in each of the plurality of plate alignment features is aligned with a respective hole formed in each of the plurality of seal alignment features and with a respective hole formed in each of the plurality of film alignment features so that the gasket seal is properly aligned within the seal groove of the bipolar plate.

In some embodiments, the adhesive film may be adhered to an underside of the gasket seal to locate the adhesive film between the seal groove of the bipolar plate and the gasket seal. In some embodiments, each of the plurality of film alignment features may be aligned with a respective one of the plurality of seal alignment features and a respective one of the plurality of plate alignment features. In some embodiments, the perimeter of the bipolar plate may be defined by a first side, a second side opposite the first side, a third side extending between and interconnecting the first side and the second side, and a fourth side opposite the third side and extending between and interconnecting the first side and the second side.

In some embodiments, the perimeter of the gasket seal may be defined by a first side, a second side opposite the first side of the perimeter of the gasket seal, a third side extending between and interconnecting the first side of the perimeter of the gasket seal and the second side of the perimeter of the gasket seal, and a fourth side opposite the third side of the perimeter of the gasket seal and extending between and interconnecting the first side of the perimeter of the gasket seal and the second side of the perimeter of the gasket seal.

In some embodiments, the plurality of plate alignment features may include a first plate alignment feature extending outwardly from the first side of the perimeter of the bipolar plate, a second plate alignment feature extending outwardly from the second side of the perimeter of the bipolar plate, a third plate alignment feature extending outwardly from the third side of the perimeter of the bipolar plate, and a fourth plate alignment feature extending outwardly from the fourth side of the perimeter of the bipolar plate. In some embodiments, the plurality of seal alignment features may include a first seal alignment feature extending outwardly from the first side of the perimeter of the gasket seal, a second seal alignment feature extending outwardly from the second side of the perimeter of the gasket seal, a third seal alignment feature extending outwardly from the third side of the perimeter of the gasket seal, and a fourth seal alignment feature extending outwardly from the fourth side of the perimeter of the gasket seal.

In some embodiments, the perimeter of the adhesive film may be defined by a first side, a second side opposite the first side of the perimeter of the adhesive film, a third side extending between and interconnecting the first side of the perimeter of the adhesive film and the second side of the perimeter of the adhesive film, and a fourth side opposite the third side of the perimeter of the adhesive film and extending between and interconnecting the first side of the perimeter of the adhesive film and the second side of the perimeter of the adhesive film.

In some embodiments, the plurality of film alignment features may include a first film alignment feature extending outwardly from the first side of the perimeter of the adhesive film, a second film alignment feature extending outwardly from the second side of the perimeter of the adhesive film, a third film alignment feature extending outwardly from the third side of the perimeter of the adhesive film, and a fourth film alignment feature extending outwardly from the fourth side of the perimeter of the adhesive film.

In some embodiments, the first plate alignment feature may be aligned with the first seal alignment feature and the first film alignment feature, the second plate alignment feature may be aligned with the second seal alignment feature and the second film alignment feature, the third plate alignment feature may be aligned with the third seal alignment feature and the third film alignment feature, and the fourth plate alignment feature may be aligned with the fourth seal alignment feature and the fourth film alignment feature.

In some embodiments, the bipolar plate alignment system may further comprise a plurality of alignment pins. In some embodiments, each of the plurality of alignment pins may be configured to extend through a corresponding hole formed in one of the plurality of plate alignment features, a corresponding hole formed in one of the plurality of seal alignment features, and a corresponding hole formed in one of the plurality of film alignment features.

In another aspect described herein, a bipolar plate alignment system comprises a bipolar plate, a gasket seal, and a plurality of alignment pins. The bipolar plate is formed to include a seal groove defined in a first side of the bipolar plate and a plurality of plate alignment features extending outwardly from a perimeter of the bipolar plate. Each of the plurality of plate alignment features is formed to include a hole extending therethrough. The gasket seal is sized to fit within the seal groove of the bipolar plate to seal reactants within an active area of the bipolar plate. The gasket seal is formed to include a plurality of seal alignment features extending outwardly from a perimeter of the gasket seal. Each of the plurality of seal alignment features is formed to include a hole extending therethrough. Each of the plurality of alignment pins is configured to extend through a corresponding hole formed in one of the plurality of plate alignment features and a corresponding hole formed in one of the plurality of seal alignment features. The gasket seal is arranged on the bipolar plate so that the hole formed in each of the plurality of plate alignment features is aligned with a respective hole formed in each of the plurality of seal alignment features so that each of the plurality of alignment pins extends through a respective hole of the plurality of plate alignment features and a respective hole of the plurality of seal alignment features to align the gasket seal within the seal groove.

In some embodiments, the bipolar plate alignment system may further comprise an adhesive film attached to an underside of the gasket seal. In some embodiments, the adhesive film may be formed to include a plurality of film alignment features extending outwardly from a perimeter of the adhesive film. In some embodiments, each of the plurality of film alignment features may be formed to include a hole extending therethrough.

In some embodiments, the hole formed in each of the plurality of film alignment features may be aligned with a respective hole formed in each of the plurality of seal alignment features and a respective hole formed in each of the plurality of plate alignment features. In some embodiments, each of the plurality of film alignment features may be aligned with a respective one of the plurality of seal alignment features and a respective one of the plurality of plate alignment features.

In some embodiments, the perimeter of the bipolar plate may be defined by a first side, a second side opposite the first side, a third side extending between and interconnecting the first side and the second side, and a fourth side opposite the third side and extending between and interconnecting the first side and the second side. In some embodiments, the perimeter of the gasket seal may be defined by a first side, a second side opposite the first side of the perimeter of the gasket seal, a third side extending between and interconnecting the first side of the perimeter of the gasket seal and the second side of the perimeter of the gasket seal, and a fourth side opposite the third side of the perimeter of the gasket seal and extending between and interconnecting the first side of the perimeter of the gasket seal and the second side of the perimeter of the gasket seal.

In some embodiments, the plurality of plate alignment features may include a first plate alignment feature extending outwardly from the first side of the perimeter of the bipolar plate, a second plate alignment feature extending outwardly from the second side of the perimeter of the bipolar plate, a third plate alignment feature extending outwardly from the third side of the perimeter of the bipolar plate, and a fourth plate alignment feature extending outwardly from the fourth side of the perimeter of the bipolar plate. In some embodiments, the plurality of plate alignment features may further include a fifth plate alignment feature extending outwardly from the first side of the perimeter of the bipolar plate spaced apart from the first plate alignment feature and a sixth plate alignment feature extending outwardly from the second side of the perimeter of the bipolar plate spaced apart from the second plate alignment feature.

In some embodiments, the plurality of seal alignment features may include a first seal alignment feature extending outwardly from the first side of the perimeter of the gasket seal, a second seal alignment feature extending outwardly from the second side of the perimeter of the gasket seal, a third seal alignment feature extending outwardly from the third side of the perimeter of the gasket seal, and a fourth seal alignment feature extending outwardly from the fourth side of the perimeter of the gasket seal. In some embodiments, the first plate alignment feature may be aligned with the first seal alignment feature, the second plate alignment feature may be aligned with the second seal alignment feature, the third plate alignment feature may be aligned with the third seal alignment feature, and the fourth plate alignment feature may be aligned with the fourth seal alignment feature.

### BRIEF DESCRIPTION OF THE DRAWINGS

FIG. 1A is a schematic view of an exemplary fuel cell system including an air delivery system, a hydrogen delivery system, and a fuel cell module including a stack of multiple fuel cells;
FIG. 1B is a cutaway view of an exemplary fuel cell system including an air delivery system, hydrogen delivery systems, and a plurality of fuel cell modules each including multiple fuel cell stacks;
FIG. 1C is a perspective view of an exemplary repeating unit of a fuel cell stack of the fuel cell system of FIG. 1A;
FIG. 1D is a cross-sectional view of an exemplary repeating unit of the fuel cell stack of FIG. 1C;
FIG. 2A is perspective view of an electrolyzer cell stack according to the present disclosure;
FIG. 2B is a schematic view of an electrolysis system configured to utilize the electrolyzer cell stack of FIG. 2A;
FIG. 2C is a schematic view of an additional portion of the electrolysis system of FIG. 2B;
FIG. 3 is a perspective view of a bipolar plate alignment system including a bipolar plate, a gasket seal, and an adhesive film;
FIG. 4 is a perspective view of the bipolar plate of the bipolar plate alignment system of FIG. 3 showing that the bipolar plate is formed to include a seal groove to receive the gasket seal and the adhesive film therein and a plurality of plate alignment features extending outwardly from a perimeter of the bipolar plate, each of the plurality of plate alignment features is formed to include a hole extending therethrough;
FIG. 5 is a perspective view of the gasket seal of the bipolar plate alignment system of FIG. 3, the gasket seal is formed to include a plurality of seal alignment features extending outwardly from a perimeter of the gasket seal, each of the plurality of seal alignment features is formed to include a hole extending therethrough;
FIG. 6 is a perspective view of the adhesive film of the bipolar plate alignment system of FIG. 3, the adhesive film is formed to include a plurality of film alignment features extending outwardly from a perimeter of the adhesive film, each of the plurality of film alignment features is formed to include a hole extending therethrough;
FIG. 7 is a perspective view of the adhesive film attached to an underside of the gasket seal; and
FIG. 8 is an exploded view of the bipolar plate alignment system showing that the bipolar plate alignment system further includes a plurality of alignment pins extending through the hole of each of the plurality of plate alignment features and the gasket seal and the adhesive film are aligned with the bipolar plate via the plurality of plate alignment pins.

### DETAILED DESCRIPTION

Fuel cell systems are known for their efficient use of fuel to produce direct current electric energy to power mobile applications, such as, for example, vehicles, trains, buses, and trucks. Electrolyzer systems are known for their efficient use of water and electricity to produce hydrogen and oxygen. Typical fuel cell systems and electrolyzer systems include bipolar plates that uniformly distribute reactants to an active area of cells of the fuel cell system or electrolyzer system. Typical fuel cell systems and electrolyzer systems also include gasket seals to seal reactants within the active area. It may be advantageous to ensure alignment of the gasket seal with the bipolar plates so that proper sealing occurs.

The present disclosure is directed to a bipolar plate alignment system for a gasket seal and a bipolar plate and methods of using the same. For example, the gasket seal and the bipolar plate are each formed with alignment features that may be useful for proper alignment of the gasket seal with respect to the bipolar plate.

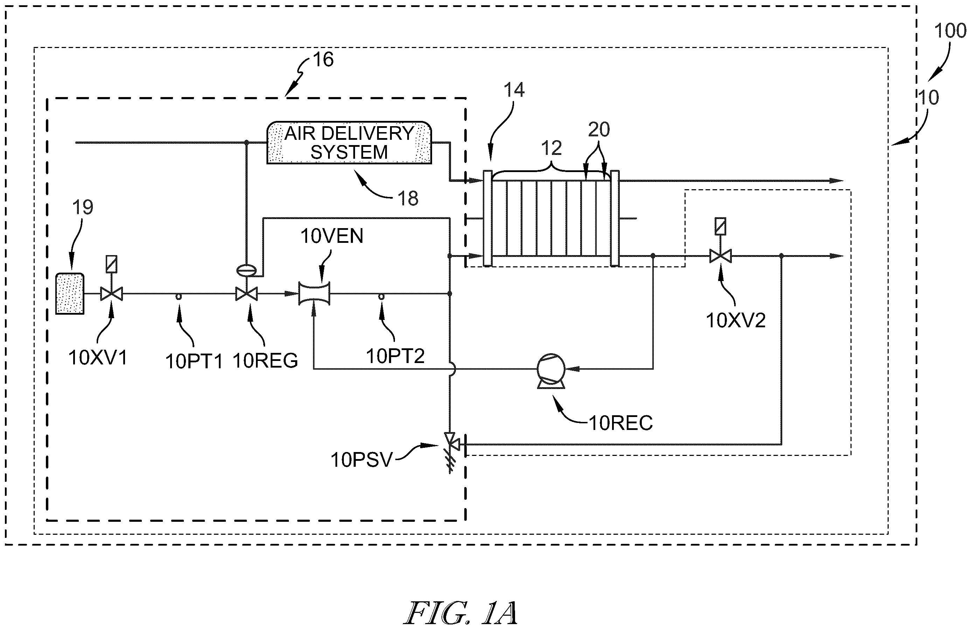

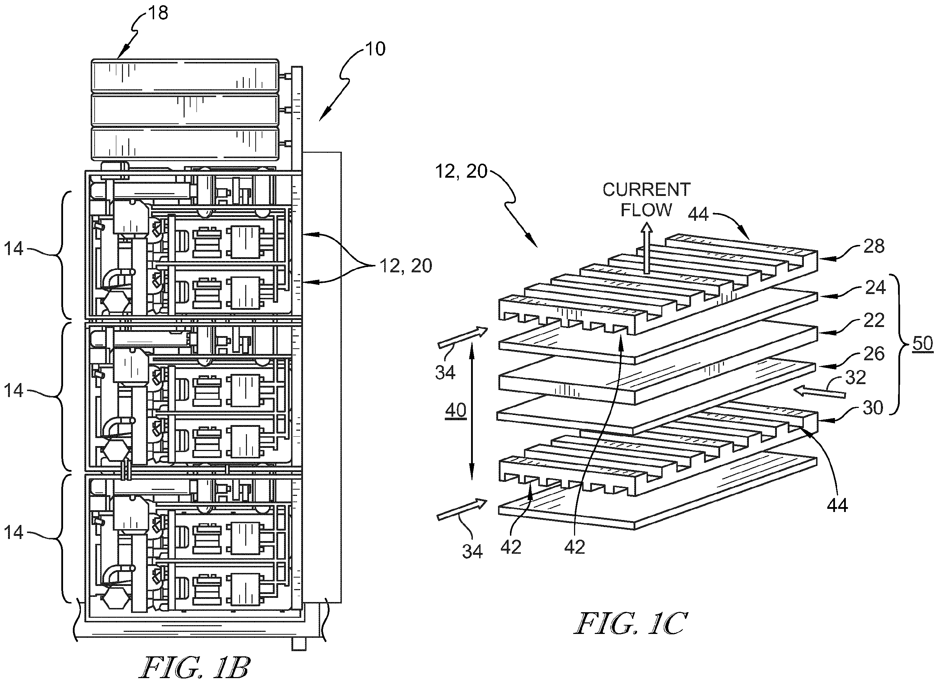

As shown in FIG. 1A, fuel cell systems 10 often include one or more fuel cell stacks 12 or fuel cell modules 14 connected to a balance of plant (BOP) 16, including various components, to support the electrochemical conversion, generation, and/or distribution of electrical power to help meet modern day industrial and commercial needs in an environmentally friendly way. As shown in FIGS. 1B and 1C, fuel cell systems 10 may include fuel cell stacks 12 comprising a plurality of individual fuel cells 20. Each fuel cell stack 12 may house a plurality of fuel cells 20 assembled together in series and/or in parallel. The fuel cell system 10 may include one or more fuel cell modules 14, as shown in FIGS. 1A and 1B. In some embodiments, the fuel cell system 10 may comprise one or more fuel cell stacks 12.

Each fuel cell module 14 may include a plurality of fuel cell stacks 12 and/or a plurality of fuel cells 20. The fuel cell module 14 may also include a suitable combination of associated structural elements, mechanical systems, hardware, firmware, and/or software that is employed to support the function and operation of the fuel cell module 14. Such items include, without limitation, piping, sensors, regulators, current collectors, seals, and insulators.

The fuel cells 20 in the fuel cell stacks 12 may be stacked together to multiply and increase the voltage output of a single fuel cell stack 12. The number of fuel cell stacks 12 in a fuel cell system 10 can vary depending on the amount of power required to operate the fuel cell system 10 and meet the power need of any load. The number of fuel cells 20 in a fuel cell stack 12 can vary depending on the amount of power required to operate the fuel cell system 10 including the fuel cell stacks 12.

The number of fuel cells 20 in each fuel cell stack 12 or fuel cell system 10 can be any number. For example, the number of fuel cells 20 in each fuel cell stack 12 may range from about 100 fuel cells to about 1000 fuel cells, including any specific number or range of number of fuel cells 20 comprised therein (e.g., about 200 to about 800). In an embodiment, the fuel cell system 10 may include about 20 to about 1000 fuel cells stacks 12, including any specific number or range of number of fuel cell stacks 12 comprised therein (e.g., about 200 to about 800). The fuel cells 20 in the fuel cell stacks 12 within the fuel cell module 14 may be oriented in any direction to optimize the operational efficiency and functionality of the fuel cell system 10.

The fuel cells 20 in the fuel cell stacks 12 may be any type of fuel cell 20. The fuel cell 20 may be a polymer electrolyte membrane or proton exchange membrane (PEM) fuel cell, an anion exchange membrane fuel cell (AEMFC), an alkaline fuel cell (AFC), a molten carbonate fuel cell (MCFC), a direct methanol fuel cell (DMFC), a regenerative fuel cell (RFC), a phosphoric acid fuel cell (PAFC), or a solid oxide fuel cell (SOFC). In an exemplary embodiment, the fuel cells 20 may be a polymer electrolyte membrane or proton exchange membrane (PEM) fuel cell or a solid oxide fuel cell (SOFC).

In an embodiment shown in FIG. 1C, the fuel cell stack 12 includes a plurality of proton exchange membrane (PEM) fuel cells 20. Each fuel cell 20 includes a single membrane electrode assembly (MEA) 22 and a gas diffusion layers (GDL) 24, 26 on either or both sides of the membrane electrode assembly (MEA) 22 (see FIG. 1C). The fuel cell 20 further includes a bipolar plate (BPP) 28, 30 on the external side of each gas diffusion layers (GDL) 24, 26, as shown in FIG. 1C. The above-mentioned components, in particular the bipolar plate 30, the gas diffusion layer (GDL) 26, the membrane electrode assembly (MEA) 22, and the gas diffusion layer (GDL) 24 comprise a single repeating unit 50.

The bipolar plates (BPP) 28, 30 are responsible for the transport of reactants, such as fuel 32 (e.g., hydrogen) or oxidant 34 (e.g., oxygen, air), and cooling liquid 36 (e.g., coolant and/or water) in a fuel cell 20. The bipolar plates (BPP) 28, 30 can uniformly distribute reactants 32, 34 to an active area 40 of each fuel cell 20 through oxidant flow fields 42 and/or fuel flow fields 44 formed on outer surfaces of the bipolar plates (BPP) 28, 30. The active area 40, where the electrochemical reactions occur to generate electrical power produced by the fuel cell 20, is centered, when viewing the stack 12 from a top-down perspective, within the membrane electrode assembly (MEA) 22, the gas diffusion layers (GDL) 24, 26, and the bipolar plate (BPP) 28, 30.

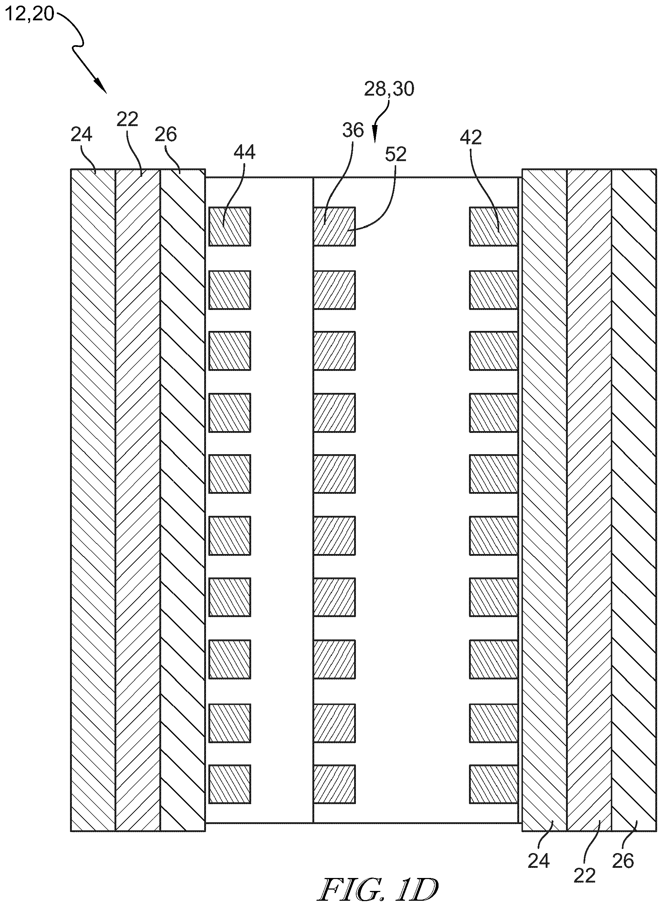

The bipolar plates (BPP) 28, 30 may each be formed to have reactant flow fields 42, 44 formed on opposing outer surfaces of the bipolar plate (BPP) 28, 30, and formed to have coolant flow fields 52 located within the bipolar plate (BPP) 28, 30, as shown in FIG. 1D. For example, the bipolar plate (BPP) 28, 30 can include fuel flow fields 44 for transfer of fuel 32 on one side of the plate 28, 30 for interaction with the gas diffusion layer (GDL) 26. The bipolar plate (BPP) 28, 30 also includes oxidant flow fields 42 for transfer of oxidant 34 on the second, opposite side of the plate 28, 30 for interaction with the gas diffusion layer (GDL) 24.

As shown in FIG. 1D, the bipolar plates (BPP) 28, 30 can further include coolant flow fields 52 formed within the plate (BPP) 28, 30, generally centrally between the opposing outer surfaces of the plate (BPP) 28, 30. The coolant flow fields 52 facilitate the flow of cooling liquid 36 through the bipolar plate (BPP) 28, 30 in order to regulate the temperature of the plate (BPP) 28, 30 materials and the reactants. The bipolar plates (BPP) 28, 30 are compressed against adjacent gas diffusion layers (GDL) 24, 26 to isolate and/or seal one or more reactants 32, 34 within their respective pathways 44, 42 to maintain electrical conductivity, which is required for robust operation of the fuel cell 20 (see FIGS. 1C and 1D).

The fuel cell system 10 described herein may be used in stationary and/or immovable power system, such as industrial applications and power generation plants. The fuel cell system 10 may also be implemented in conjunction with an air delivery system 18. Additionally, the fuel cell system 10 may also be implemented in conjunction with a hydrogen delivery system and/or a source of hydrogen 19 such as a pressurized tank, including a gaseous pressurized tank, cryogenic liquid storage tank, chemical storage, physical storage, stationary storage, an electrolysis system, or an electrolyzer. In one embodiment, the fuel cell system 10 is connected and/or attached in series or parallel to a hydrogen delivery system and/or a source of hydrogen 19, such as one or more hydrogen delivery systems and/or sources of hydrogen 19 in the BOP 16 (see FIG. 1A). In another embodiment, the fuel cell system 10 is not connected and/or attached in series or parallel to a hydrogen delivery system and/or a source of hydrogen 19.

In some embodiments, the fuel cell system 10 may include an on/off valve 10XV1, a pressure transducer 10PT1, a mechanical regulator 10REG, and a venturi 10VEN arranged in operable communication with each other and downstream of the hydrogen delivery system and/or source of hydrogen 19, as shown in FIG. 1A. The pressure transducer 10PT1 may be arranged between the on/off valve 10XV1 and the mechanical regulator 10REG. In some embodiments, a proportional control valve may be utilized instead of a mechanical regulator 10REG. In some embodiments, a second pressure transducer 10PT2 is arranged downstream of the venturi 10VEN, which is downstream of the mechanical regulator 10REG.

In some embodiments, the fuel cell system 10 may further include a recirculation pump 10REC downstream of the stack 12 and operably connected to the venturi 10VEN, as shown in FIG. 1A. The fuel cell system 10 may also include a further on/off valve 10XV2 downstream of the stack 12, and a pressure transfer valve 10PSV, as shown in FIG. 1A.

The present fuel cell system 10 may also be comprised in mobile applications. In an exemplary embodiment, the fuel cell system 10 is in a vehicle and/or a powertrain 100. A vehicle 100 comprising the present fuel cell system 10 may be an automobile, a pass car, a bus, a truck, a train, a locomotive, an aircraft, a light duty vehicle, a medium duty vehicle, or a heavy-duty vehicle. Types of vehicles 100 can also include, but are not limited to commercial vehicles and engines, trains, trolleys, trams, planes, buses, ships, boats, and other known vehicles, as well as other machinery and/or manufacturing devices, equipment, installations, among others.

The vehicle and/or a powertrain 100 may be used on roadways, highways, railways, airways, and/or waterways. The vehicle 100 may be used in applications including but not limited to off highway transit, bobtails, and/or mining equipment. For example, an exemplary embodiment of mining equipment vehicle 100 is a mining truck or a mine haul truck.

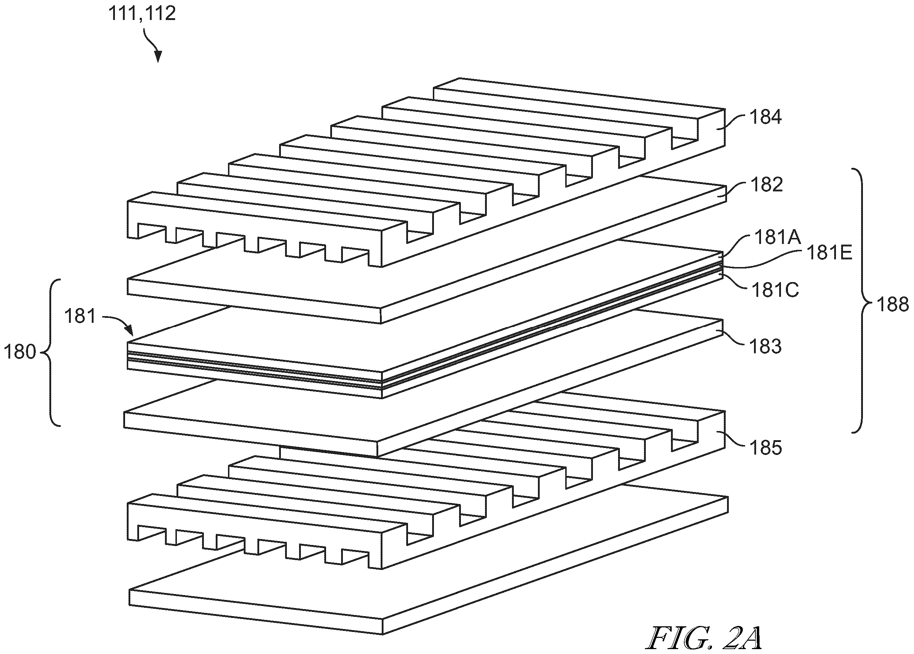

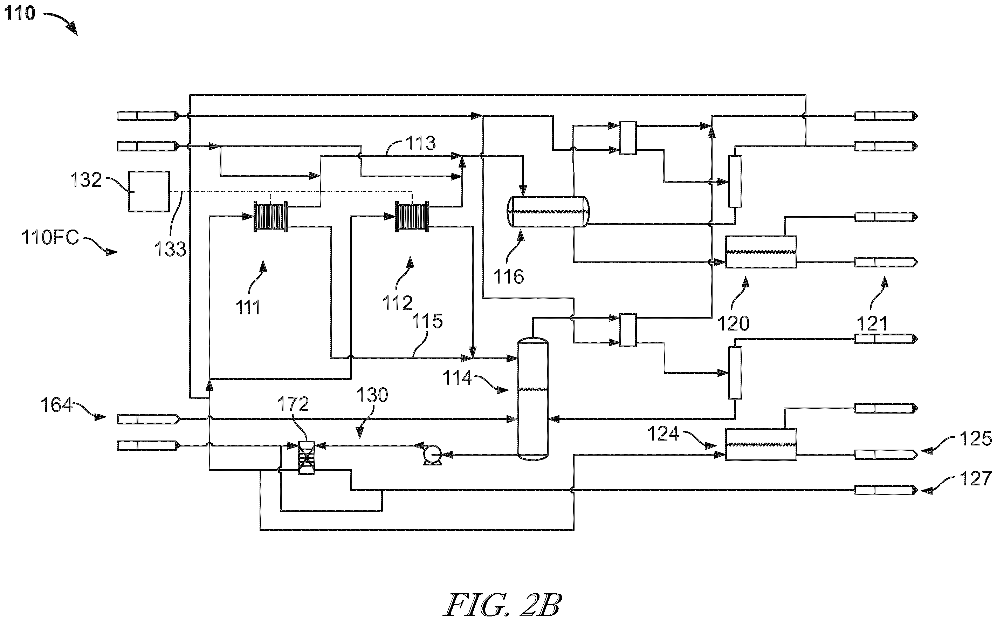

As shown in FIGS. 2A and 2B, electrolysis systems 110 are typically configured to utilize water and electricity to produce hydrogen and oxygen. An electrolysis system 110 typically includes one or more electrolyzer cells 180 that utilize electricity to chemically produce substantially pure hydrogen 113 and oxygen 115 from deionized water 130. Often the electrical source for the electrolysis systems 110 is produced from power or energy generation systems, including renewable energy systems such as wind, solar, hydroelectric, and geothermal sources for the production of green hydrogen. In turn, the pure hydrogen produced by the electrolysis systems 110 is often utilized as a fuel or energy source for those same power generation systems, such as fuel cell systems. Alternatively, the pure hydrogen produced by the electrolysis systems 110 may be stored for later use.

The typical electrolyzer cell 180, or electrolytic cell, is comprised of multiple assemblies compressed and bound into a single assembly, and multiple electrolyzer cells 180 may be stacked relative to each other, along with bipolar plates (BPP) 184, 185 therebetween, to form an electrolyzer cell stack (for example, electrolyzer cell stacks 111, 112 in FIG. 2B). Each electrolyzer cell stack 111, 112 may house a plurality of electrolyzer cells 180 connected together in series and/or in parallel. The number of electrolyzer cell stacks 111, 112 in the electrolysis systems 110 can vary depending on the amount of power required to meet the power need of any load (e.g., fuel cell stack). The number of electrolyzer cells 180 in an electrolyzer cell stack 111, 112 can vary depending on the amount of power required to operate the electrolysis systems 110 including the electrolyzer cell stack 111, 112.

An electrolyzer cell 180 includes a multi-component membrane electrode assembly (MEA) 181 that has an electrolyte 181E, an anode 181A, and a cathode 181C. Typically, the anode 181A, cathode 181C, and electrolyte 181E of the membrane electrode assembly (MEA) 181 are configured in a multi-layer arrangement that enables the electrochemical reaction to produce hydrogen and/or oxygen via contact of the water with one or more gas diffusion layers 182, 183. The gas diffusion layers (GDL) 182, 183, which may also be referred to as porous transport layers (PTL), are typically located on one or both sides of the MEA 181. Bipolar plates (BPP) 184, 185 often reside on either side of the GDLs and separate the individual electrolyzer cells 180 of the electrolyzer cell stack 111, 112 from one another. One bipolar plate 185 and the adjacent gas diffusion layers 182, 183 and MEA 181 can form a repeating unit 188.

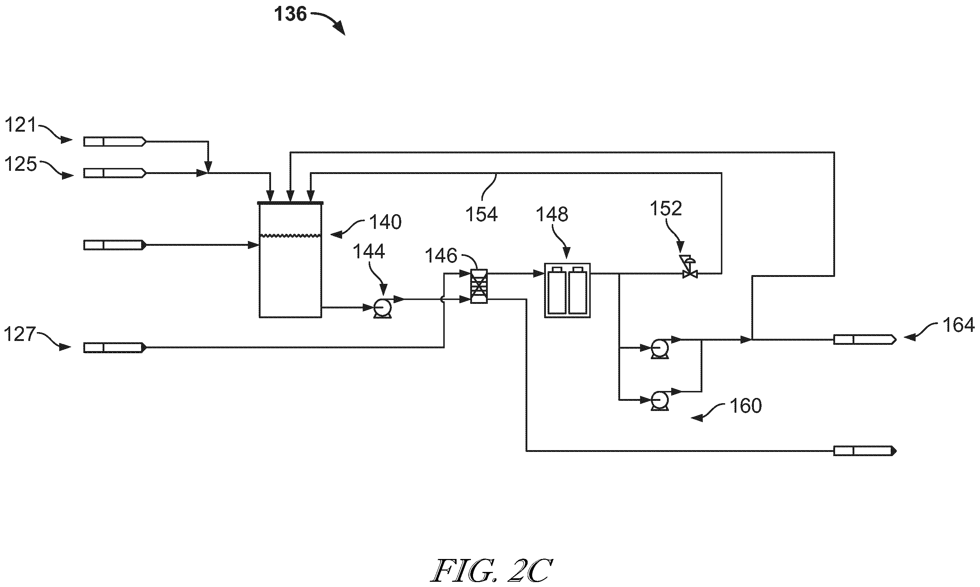

As shown in FIGS. 2B and 2C, an exemplary electrolysis system 110 can include two electrolyzer cell stacks 111, 112 and a fluidic circuit 110FC including the various fluidic pathways shown in FIGS. 2B and 2C that is configured to circulate, inject, and purge fluid and other components to and from the electrolysis systems 110. A person skilled in the art would understand that one or a variety of a number of components within the fluidic circuit 110FC, as well as more or less than two electrolyzer cell stacks 111, 112, may be utilized in the electrolysis systems 110. For example, the electrolysis systems 110 may include one electrolyzer cell stack 111, and in other examples, the electrolysis systems 110 may include three or more electrolyzer cell stacks.

The electrolysis systems 110 may include one or more types of electrolyzer cell stacks 111, 112 therein. In the illustrated embodiment, a polymer electrolyte membrane (PEM) electrolyzer cell 180 may be utilized in the stacks 111, 112. A PEM electrolyzer cell 180 typically operates at about 4°C to about 150°C, including any specific or range of temperatures comprised therein. A PEM electrolyzer cell 180 also typically functions at about 100 bar or less, but can go up to about 1000 bar (including any specific or range of pressures comprised therein), which reduces the total energy demand of the system. A standard electrochemical reaction that occurs in a PEM electrolyzer cell 180 to produce hydrogen is as follows.
- Anode: 2H₂O → O₂ + 4H⁺ + 4e⁻
- Cathode: 4H⁺ + 4e⁻ → 2H₂
- Overall: 2H₂O (liquid) → 2H₂ + O₂

Additionally, a solid oxide electrolyzer cell 180 may be utilized in the electrolysis systems 110. A solid oxide electrolyzer cell 180 will function at about 500°C to about 1000°C, including any specific or range of temperatures comprised therein. A standard electrochemical reaction that occurs in a solid oxide electrolyzer cell 180 to produce hydrogen is as follows.
- Anode: 2O²⁻ → O₂ + 4e⁻
- Cathode: 2H₂O → 4e⁻ + 2H₂ + 2O²⁻
- Overall: 2H₂O (liquid) → 2H₂ + O₂

Moreover, an AEM electrolyzer cell 180 may utilized, which uses an alkaline media. An exemplary AEM electrolyzer cell 180 is an alkaline electrolyzer cell 180. Alkaline electrolyzer cells 180 comprise aqueous solutions, such as potassium hydroxide (KOH) and/or sodium hydroxide (NaOH), as the electrolyte. Alkaline electrolyzer cells 180 typically perform at operating temperatures ranging from about 0°C to about 150°C, including any specific or range of temperatures comprised therein. Alkaline electrolyzer cell 180 generally operate at pressures ranging from about 1 bar to about 100 bar, including any specific or range of pressures comprised therein. A typical hydrogen-generating electrochemical reaction that occurs in an alkaline electrolyzer cell 180 is as follows.
- Anode: 4OH⁻ → O₂ + 2H₂O + 4e⁻
- Cathode: 4H₂O + 4e⁻ → 2H₂ + 4OH⁻
- Overall: 2 H₂O 2H₂ + O₂

As shown in FIG. 2B, the electrolyzer cell stacks 111, 112 include one or more electrolyzer cells 180 that utilize electricity to chemically produce substantially pure hydrogen and oxygen from water. In turn, the pure hydrogen produced by the electrolyzer may be utilized as a fuel or energy source. As shown in FIG. 2B, the electrolyzer cell stack 111, 112 outputs the produced hydrogen along a fluidic connecting line 113 to a hydrogen separator 116, and also outputs the produced oxygen along a fluidic connecting line 115 to an oxygen separator 114.

The hydrogen separator 116 may be configured to output pure hydrogen gas and also send additional output fluid to a hydrogen drain tank 120, which then outputs fluid to a deionized water drain 121. The oxygen separator 114 may output fluid to an oxygen drain tank 124, which in turn outputs fluid to a deionized water drain 125. A person skilled in the art would understand that certain inputs and outputs of fluid may be pure water or other fluids such as coolant or byproducts of the chemical reactions of the electrolyzer cell stacks 111, 112. For example, oxygen and hydrogen may flow away from the cell stacks 111, 112 to the respective separators 114, 116. The system 110 may further include a rectifier 132 configured to convert electricity 133 flowing to the cell stacks 111, 112 from alternating current (AC) to direct current (DC).

The deionized water drains 121, 125 each output to a deionized water tank 140, which is part of a polishing loop 136 of the fluidic circuit 110FC, as shown in FIG. 2C. Water with ion content can damage electrolyzer cell stacks 111, 112 when the ionized water interacts with internal components of the electrolyzer cell stacks 111, 112. The polishing loop 136, shown in greater detail in FIG. 2C, is configured to deionize the water such that it may be utilized in the cell stacks 111, 112 and not damage the cell stacks 111, 112.

In the illustrated embodiment, the deionized water tank 140 outputs fluid, in particular water, to a deionized water polishing pump 144. The deionized water polishing pump 144 in turn outputs the water to a water polishing heat exchanger 146 for polishing and treatment. The water then flows to a deionized water resin tank 148.

Coolant is directed through the electrolysis systems 110, in particular through a deionized water heat exchanger 172 that is fluidically connected to the oxygen separator 114. The coolant used to cool said water may also be subsequently fed to the water polishing heat exchanger 146 via a coolant input 127 for polishing. The coolant is then output back to the deionized water heat exchanger 172 for cooling the water therein.

After the water is output from the deionized water polishing heat exchanger 146 and subsequently to the deionized water resin tank 148, a portion of the water may be fed to deionized water high pressure feed pumps 160. Another portion of the water may be fed to a deionized water pressure control valve 152, as shown in FIG. 2C. The portion of the water that is fed to the deionized water pressure control valve 152 flows through a recirculation fluidic connection 154 that allows the water to flow back to the deionized water tank 140 for continued polishing.

In some embodiments, the electrolysis systems 110 may increase deionized water skid for polishing water flow to flush out ions within the water at a faster rate. The portion of the water that is fed to the deionized water high pressure feed pumps 160 is then output to a deionized water feed 164, which then flows into the oxygen separator 114 for recirculation and eventual reusage in the electrolyzer cell stacks 111, 112. This process may then continuously repeat.

The electrolysis systems 110 described herein, may be used in stationary and/or immovable power system, such as industrial applications and power generation plants. The electrolysis systems 110 may also be implemented in conjunction with other electrolysis systems 110.

The present electrolysis systems 110 may be comprised in mobile applications. The electrolysis systems 110 may be in the vehicle or the powertrain 100. The vehicle or powertrain 100 comprising the electrolysis systems 110 may be an automobile, a pass car, a bus, a truck, a train, a locomotive, an aircraft, a light duty vehicle, a medium duty vehicle, or a heavy duty vehicle.

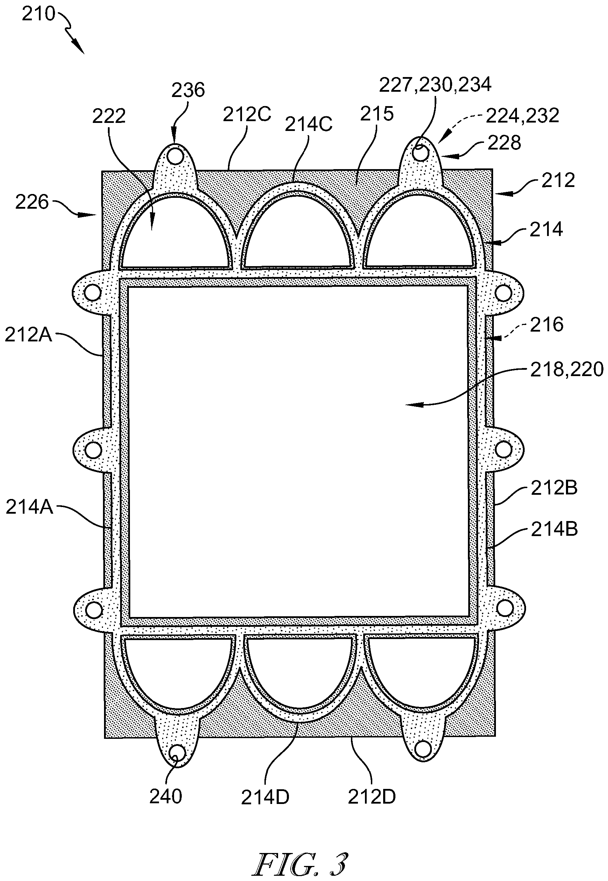

The present disclosure provides a bipolar plate alignment system 210, as shown in FIG. 3. The bipolar plate alignment system 210 includes a bipolar plate 212, a gasket seal 214, and an adhesive film 216, as shown in FIGS. 3-6. In some embodiments, the bipolar plate 212 is used in the fuel cell stack 12 (i.e., the bipolar plate 212 may be the bipolar plate (BPP) 28, 30 as previously described). In some embodiments, the bipolar plate 212 is used in the electrolyzer cell stack 111, 112 (i.e., the bipolar plate 212 may be the bipolar plate (BPP) 184, 185 as previously described).

The bipolar plate 212 separates cells within the stacks 12, 111, 112, such as the fuel cell 20 or the electrolyzer cell 180. The bipolar plate 212 conducts and collects current between the cells 20, 180, distributes reacting agents, and provides mechanical support to the cells 20, 180.

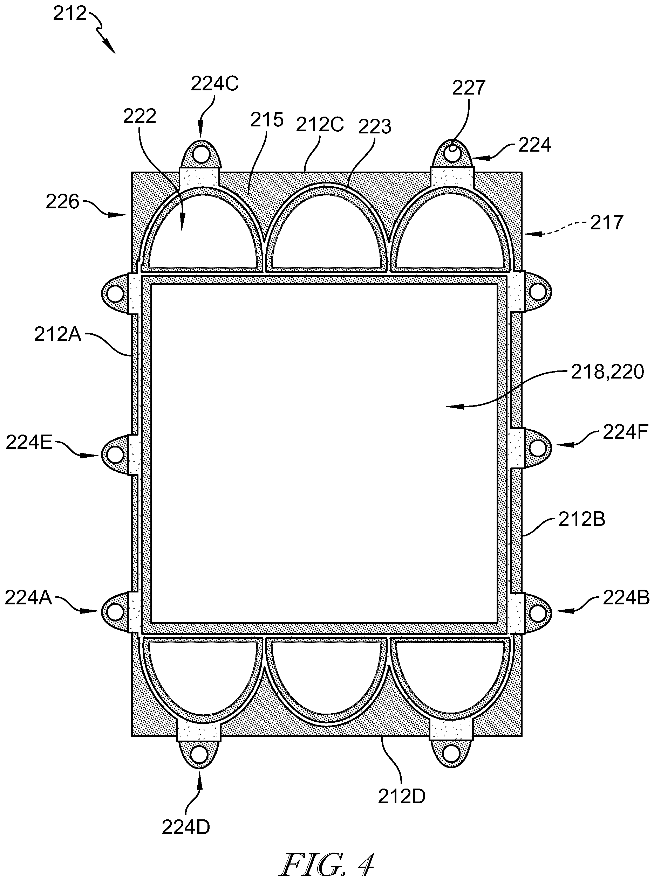

The bipolar plate 212 is formed to include a plurality of manifold port openings 222, a seal groove 223, and/or an active area 218 with flow fields 220, as shown in FIG. 4. The seal groove 223 is defined in a first side 215 of the bipolar plate 212 and is sized to receive the gasket seal 214 and the adhesive film 216 therein. The active area 218 and the flow fields 220 may be identical to the active area 40 and flow fields 42, 44, 52 previously described. The active area 218 is arranged inward of the seal groove 223 such that the gasket seal 214, when positioned in the seal groove 223, seals reacting agents within the flow fields 220 of the active area 218.

The bipolar plate 212 is further formed to include a plurality of plate alignment features 224, as shown in FIG. 4. In some embodiments, the plurality of plate alignment features 224 is integrally formed as part of the bipolar plate 212. Illustratively, each of the plurality of plate alignment features 224 is formed as a flange, a protrusion, a projection, an overhand, and/or an extension.

The plurality of plate alignment features 224 extends outwardly away from a perimeter 226 of the bipolar plate 212, as shown in FIG. 4. Each of the plurality of plate alignment features 224 are spaced apart from one another around the perimeter 226. Illustratively, the bipolar plate 212 includes ten plate alignment features 224. The number of plate alignment features 224 can be any number. For example, the number of plate alignment features 224 may range from about one (1) plate alignment feature 224 to about twenty (20) plate alignment features 224, including any specific number or range of numbers of plate alignment features 224 comprised therein.

Illustratively, the perimeter 226 of the bipolar plate 212 is defined by four sides of the bipolar plate 212: a first side 212A, a second side 212B opposite the first side 212A, a third side 212C, and a fourth side 212D opposite the third side 212C, as shown in FIG. 4. The first side 212A and the second side 212B are spaced apart from one another and parallel to one another. The third side 212C extends between and interconnects terminal ends of the first side 212A and the second side 212B. The third side 212C is spaced apart from and parallel to the fourth side 212D. The fourth side 212D extends between and interconnects terminal ends of the first side 212A and the second side 212B opposite the third side 212C.

Each of the four sides (i.e., the first side 212A, the second side 212B, the third side 212C, and the fourth side 212D) of the perimeter 226 of the bipolar plate 212 may include the same or a different number of plate alignment features 224. For example, in the illustrative plate of FIG. 4, two sides of the plate (e.g., the third side 212C and the fourth side 212D) each include two plate alignment features 224. These two plate alignment features 224 are spaced apart from one another. The other two sides of the bipolar plate 212 (e.g., the first side 212A and the second side 212B) each include three plate alignment features 224. These three plate alignment features 224 are spaced apart from one another.

In some embodiments, the plurality of plate alignment features 224 consists of one plate alignment feature 224, and the one plate alignment feature 224 extends from the first side 212A of the bipolar plate 212. In some embodiments, the plurality of plate alignment features 224 includes at least two plate alignment features 224, and one of the two plate alignment features 224 extends from the first side 212A of the bipolar plate 212 and the other of the two plate alignment features 224 extends from the second side 212B of the bipolar plate 212. In some embodiments, the plurality of plate alignment features 224 includes at least two plate alignment features 224, and one of the two plate alignment features 224 extends from the first side 212A of the bipolar plate 212 and the other of the two plate alignment features 224 extends from the third side 212C of the bipolar plate 212. In some embodiments, the plurality of plate alignment features 224 includes at least four plate alignment features 224, and one of the plate alignment features 224 extends from each of the four sides 212A, 212B, 212C, 212D of the bipolar plate 212.

As an example, in some embodiments, the plurality of plate alignment features 224 includes a first plate alignment feature 224A extending outwardly from the first side 212A of the perimeter 226 of the bipolar plate 212, a second plate alignment feature 224B extending outwardly from the second side 212B of the perimeter 226 of the bipolar plate 212, a third plate alignment feature 224C extending outwardly from the third side 212C of the perimeter 226 of the bipolar plate 212, and a fourth plate alignment feature 224D extending outwardly from the fourth side 212D of the perimeter 226 of the bipolar plate 212. In some embodiments, the plurality of plate alignment features 224 further includes a fifth plate alignment feature 224E extending outwardly from the first side 212A of the perimeter 226 of the bipolar plate 212 spaced apart from the first plate alignment feature 224A and a sixth plate alignment feature 224F extending outwardly from the second side 212B of the perimeter 226 of the bipolar plate 212 spaced apart from the second plate alignment feature 224B.

In some embodiments, each of the plurality of plate alignment features 224 has a half-moon shape or a half-circle shape. Though, each of the plurality of plate alignment features 224 may have any suitable shape.

Each of the plurality of plate alignment features 224 is formed to include a hole 227 extending therethrough, as shown in FIG. 4. Each hole 227 of each plate alignment feature 224 is configured to be coupled with one or more other alignment features and/or an alignment pin 236, as described in more detail below.

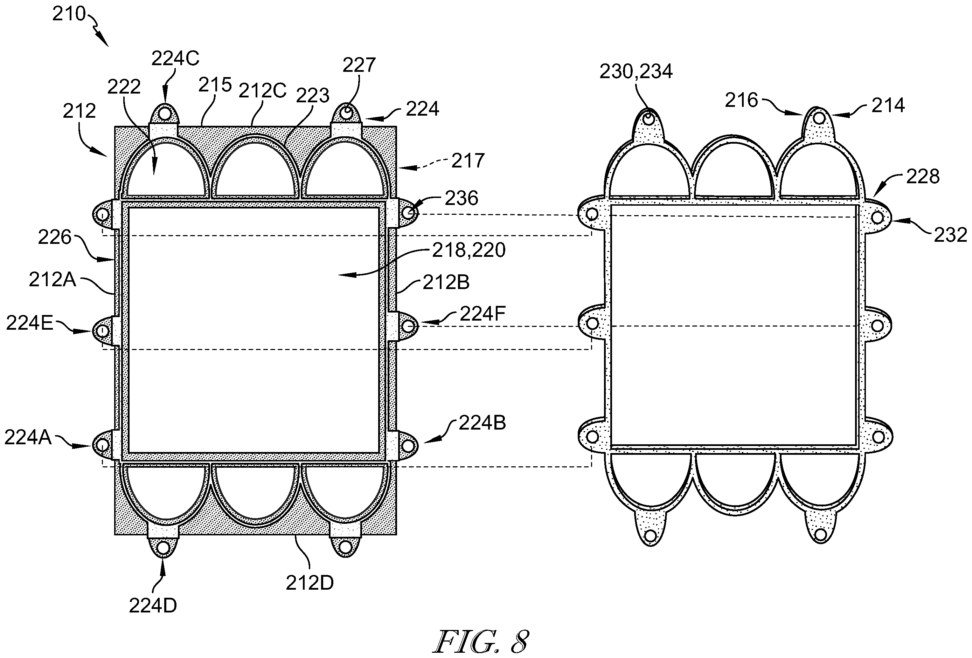

The gasket seal 214 fits into the seal groove 223 formed in the bipolar plate 212, as shown in FIGS. 3 and 8. The gasket seal 214 prevents leakage of reacting agents out of the active area 218 and into other parts of the stack 12, 111, 112. Further, the gasket seal 214 prevents electrode substrate cracking, provides electrical insulation between components of the stack 12, 111, 112, prevents expansion of the membrane electrode assembly (MEA) 22, 18, and/or provides mechanical support while the cells 20, 180 are subject to compression. The gasket seal 214 matches the shape of the seal groove 223 formed in the bipolar plate 212 so that the gasket seal 214 may be firmly inserted into the seal groove 223.

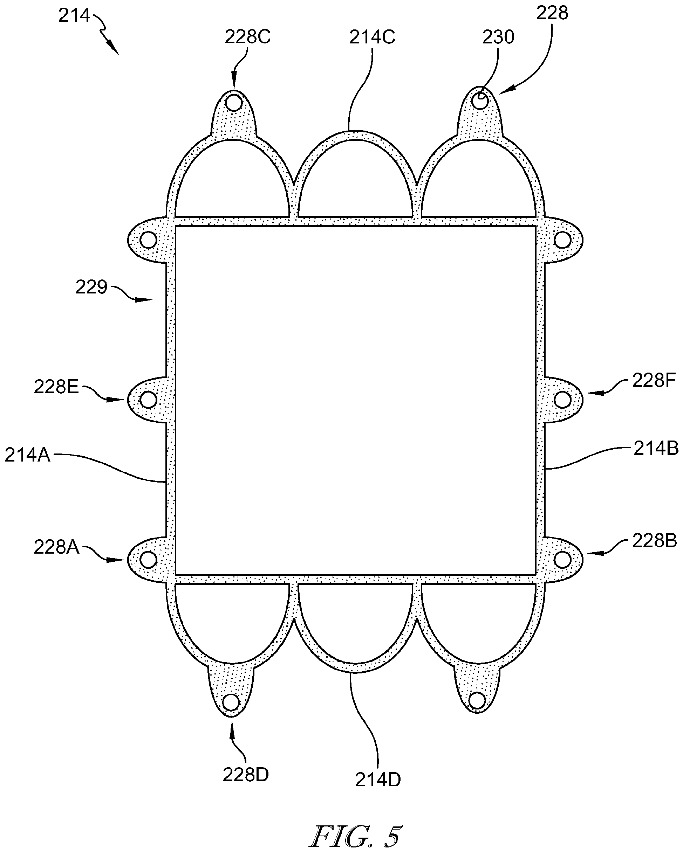

The gasket seal 214 is formed to include a plurality of seal alignment features 228 extending outwardly from a perimeter 229 of the gasket seal 214, as shown in FIG. 5. In some embodiments, the plurality of seal alignment features 228 is integrally formed as part of the gasket seal 214. Each of the plurality of seal alignment features 228 are spaced apart from one another around the perimeter 229 of the gasket seal 214. Illustratively, each of the plurality of seal alignment features 228 is formed as a flange, a protrusion, a projection, an overhand, and/or an extension.

Illustratively, the perimeter 229 of the gasket seal 214 is defined by four sides of the gasket seal 214: a first side 214A, a second side 214B opposite the first side 214A, a third side 214C, and a fourth side 214D opposite the third side 214C, as shown in FIG. 5. The first side 214A and the second side 214B are spaced apart from one another and parallel to one another. The third side 214C extends between and interconnects terminal ends of the first side 214A and the second side 214B. The third side 214C is spaced apart from the fourth side 214D. The fourth side 214D extends between and interconnects terminal ends of the first side 214A and the second side 214B opposite the third side 214C.

Each of the four sides (i.e., the first side 214A, the second side 214B, the third side 214C, and the fourth side 214D) of the perimeter 229 of the gasket seal 214 may include the same or a different number of seal alignment features 228. For example, in the illustrative gasket seal 214 of FIG. 5, two sides of the gasket seal 214 (e.g., the third side 214C and the fourth side 214D) each include two seal alignment features 228. These two seal alignment features 228 are spaced apart from one another. The other two sides of the gasket seal 214 (e.g., the first side 214A and the second side 214B) each include three seal alignment features 228. These three seal alignment features 228 are spaced apart from one another.

In some embodiments, the plurality of seal alignment features 228 consists of one seal alignment feature 228, and the one seal alignment feature 228 extends from the first side 214A of the gasket seal 214. In some embodiments, the plurality of seal alignment features 228 includes at least two seal alignment features 228, and one of the two seal alignment features 228 extends from the first side 214A of the gasket seal 214 and the other of the two seal alignment features 228 extends from the second side 214B of the gasket seal 214. In some embodiments, the plurality of seal alignment features 228 includes at least two seal alignment features 228, and one of the two seal alignment features 228 extends from the first side 214A of the gasket seal 214 and the other of the two seal alignment features 228 extends from the third side 214C of the gasket seal 214. In some embodiments, the plurality of seal alignment features 228 includes at least four seal alignment features 228, and one of the seal alignment features 228 extends from each of the four sides 214A, 214B, 214C, 214D of the gasket seal 214.

As an example, in some embodiments, the plurality of seal alignment features 228 includes a first seal alignment feature 228A extending outwardly from the first side 214A of the perimeter 229 of the gasket seal 214, a second seal alignment feature 228B extending outwardly from the second side 214B of the perimeter 229 of the gasket seal 214, a third seal alignment feature 228C extending outwardly from the third side 214C of the perimeter 229 of the gasket seal 214, and a fourth seal alignment feature 228D extending outwardly from the fourth side 214D of the perimeter 229 of the gasket seal 214. In some embodiments, the plurality of seal alignment features 228 further includes a fifth seal alignment feature 228E extending outwardly from the first side 214A of the perimeter 229 of the gasket seal 214 spaced apart from the first seal alignment feature 228A and a sixth seal alignment feature 228F extending outwardly from the second side 214B of the perimeter 229 of the gasket seal 214 spaced apart from the second seal alignment feature 228B.

In some embodiments, each of the plurality of seal alignment features 228 has a half-moon shape or a half-circle shape. Though, each of the plurality of seal alignment features 228 may have any suitable shape.

Illustratively, the plurality of seal alignment features 228 includes ten seal alignment features 228. The number of seal alignment features 228 may be any number. For example, the number of seal alignment features 228 may range from about one (1) seal alignment feature 228 to about twenty (20) seal alignment features 228, including any specific number or range of numbers of seal alignment features 228 comprised therein. In an exemplary embodiment, the number of the plurality of seal alignment features 228 is equal to the number of the plurality of plate alignment features 224, and the positioning of the plurality of plate alignment features 224 is the same as the positioning of the plurality of seal alignment features 228 such that the plate alignment features 224 and the seal alignment features 228 are aligned with one another.

Each of the plurality of seal alignment features 228 is formed to include a hole 230 extending therethrough, as shown in FIG. 5. Each hole 230 of each seal alignment feature 228 is configured to be coupled with one or more other alignment features, such as a corresponding plate alignment feature 224, a corresponding hole 227, and/or an alignment pin 236, as described in more detail below. Each hole 230 of the plurality of seal alignment features 228 aligns with a corresponding hole 227 of the plurality of plate alignment features 224.

In some embodiments, the gasket seal 214 is formed of a rubber based material. In some embodiments, the gasket seal 214 is formed of a fluorocarbon-based fluoroelastomer material. In some embodiments, the gasket seal 214 is formed of an ethylene propylene diene monomer material.

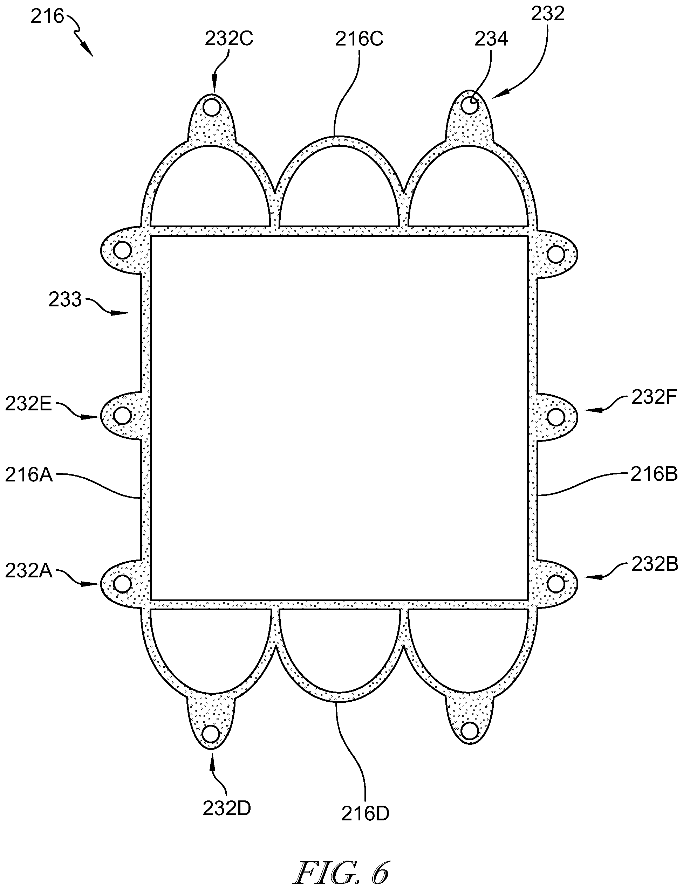

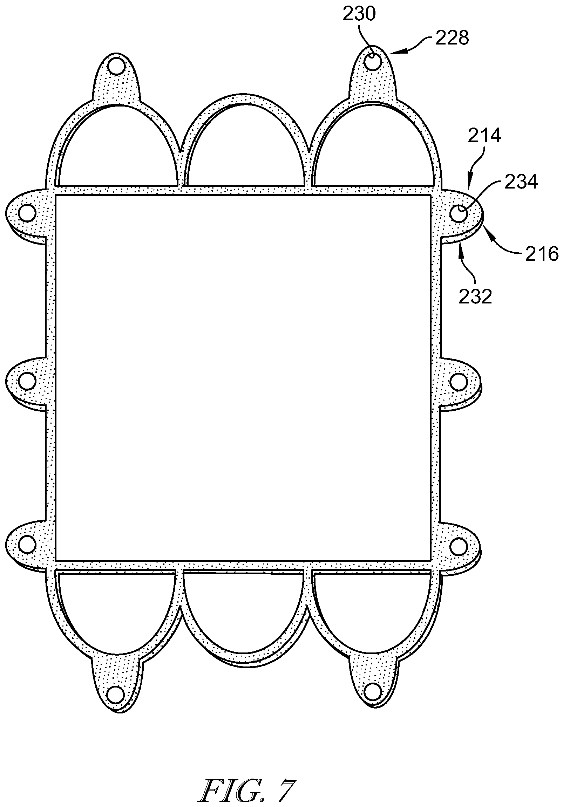

The adhesive film 216 is coupled to the gasket seal 214 and the seal groove 223, as suggested in FIG. 8. In some embodiments, the adhesive film 216 is adhered and/or attached to an underside of the gasket seal 214, as shown in FIG. 7. The adhesive film 216 matches the shape of the gasket seal 214 and the seal groove 223. The adhesive film 216 is formed to include a plurality of film alignment features 232 extending outwardly from a perimeter 233 of the adhesive film 216, as shown in FIG. 6. Each of the plurality of film alignment features 232 are spaced apart from one another around the perimeter 233 of the adhesive film 216. Illustratively, each of the plurality of film alignment features 232 is formed as a flange, a protrusion, a projection, an overhand, and/or an extension.

Illustratively, the perimeter 233 of the adhesive film 216 is defined by four sides of the adhesive film 216: a first side 216A, a second side 216B opposite the first side 216A, a third side 216C, and a fourth side 216D opposite the third side 216C, as shown in FIG. 6. The first side 216A and the second side 216B are spaced apart from one another and parallel to one another. The third side 216C extends between and interconnects terminal ends of the first side 216A and the second side 216B. The third side 216C is spaced apart from the fourth side 216D. The fourth side 216D extends between and interconnects terminal ends of the first side 216A and the second side 216B opposite the third side 216C.

Each of the four sides (i.e., the first side 216A, the second side 216B, the third side 216C, and the fourth side 216D) of the perimeter 233 of the adhesive film 216 may include the same or a different number of film alignment features 232. For example, in the illustrative adhesive film 216 of FIG. 6, two sides of the adhesive film 216 (e.g., the third side 216C and the fourth side 216D) each include two film alignment features 232. These two film alignment features 232 are spaced apart from one another. The other two sides of the adhesive film 216 (e.g., the first side 216A and the second side 216B) each include three film alignment features 232. These three film alignment features 232 are spaced apart from one another.

In some embodiments, the plurality of film alignment features 232 consists of one film alignment feature 232, and the one film alignment feature 232 extends from the first side 216A of the adhesive film 216. In some embodiments, the plurality of film alignment features 232 includes at least two film alignment features 232, and one of the two film alignment features 232 extends from the first side 216A of the adhesive film 216 and the other of the two film alignment features 232 extends from the second side 216B of the adhesive film 216. In some embodiments, the plurality of film alignment features 232 includes at least two film alignment features 232, and one of the two film alignment features 232 extends from the first side 216A of the adhesive film 216 and the other of the two film alignment features 232 extends from the third side 216C of the adhesive film 216. In some embodiments, the plurality of film alignment features 232 includes at least four film alignment features 232, and one of the film alignment features 232 extends from each of the four sides 216A, 216B, 216C, 216D of the adhesive film 216.

As an example, in some embodiments, the plurality of film alignment features 232 includes a first film alignment feature 232A extending outwardly from the first side 216A of the perimeter 233 of the adhesive film 216, a second film alignment feature 232B extending outwardly from the second side 216B of the perimeter 233 of the adhesive film 216, a third film alignment feature 232C extending outwardly from the third side 216C of the perimeter 233 of the adhesive film 216, and a fourth film alignment feature 232D extending outwardly from the fourth side 216D of the perimeter 233 of the adhesive film 216. In some embodiments, the plurality of film alignment features 232 further includes a fifth film alignment feature 232E extending outwardly from the first side 216A of the perimeter 233 of the adhesive film 216 spaced apart from the first film alignment feature 232A and a sixth film alignment feature 232F extending outwardly from the second side 216B of the perimeter 233 of the adhesive film 216 spaced apart from the second film alignment feature 232B.

In such an embodiment, the first plate alignment feature 224A is aligned with the first seal alignment feature 228A and the first film alignment feature 232A, the second plate alignment feature 224B is aligned with the second seal alignment feature 228B and the second film alignment feature 232B, the third plate alignment feature 224C is aligned with the third seal alignment feature 228C and the third film alignment feature 232C, and the fourth plate alignment feature 224D is aligned with the fourth seal alignment feature 228D and the fourth film alignment feature 232D.

In some embodiments, each of the plurality of film alignment features 232 has a half-moon shape or a half-circle shape. Though, each of the plurality of film alignment features 232 may have any suitable shape.

Illustratively, the plurality of film alignment features 232 includes ten film alignment features 232. The number of film alignment features 232 may be any number. For example, the number of film alignment features 232 may range from about one (1) film alignment feature 232 to about twenty (20) film alignment features 232, including any specific number or range of numbers of film alignment features 232 comprised therein. In an exemplary embodiment, the number of the plurality of film alignment features 232 is equal to the number of the plurality of seal alignment features 228 and the number of the plurality of plate alignment features 224, and the positioning of the plurality of film alignment features 232 is the same as the positioning of the plurality of seal alignment features 228 and the positioning of the plurality of plate alignment features 224 such that the plate alignment features 224, the seal alignment features 228, and the film alignment features 232 are aligned with one another.

Each of the plurality of film alignment features 232 is formed to include a hole 234 extending therethrough, as shown in FIG. 6. Each hole 234 of each film alignment feature 232 is configured to be coupled with one or more other alignment features, such as a corresponding plate alignment feature 224, a corresponding hole 227, a corresponding seal alignment feature 228, a corresponding hole 230, and/or an alignment pin 236, as described in more detail below. Each hole 234 of the plurality of film alignment features 232 aligns with a corresponding hole 230 of the plurality of seal alignment features 228 and with a corresponding hole 227 of the plurality of plate alignment features 224.

The gasket seal 214 and the adhesive film 216 are inserted into and/or positioned in the seal groove 223 formed in the bipolar plate 212 such that the adhesive film 216 is located between the seal groove 223 and the gasket seal 214, as shown in FIG. 8. The adhesive film 216 helps to attach, couple, and/or adhere the gasket seal 214 to the bipolar plate 212 by adhering to each of the gasket seal 214 and the seal groove 223 of the bipolar plate 212.

As previously indicated, the plate alignment features 224, the seal alignment features 228, and the film alignment features 232 all align with one another while the bipolar plate 212, the gasket seal 214, and the adhesive film 216 are stacked on top of one another, as shown in FIG. 3. Thus, the holes 227, 230, 234 formed in each of the plate alignment features 224, the seal alignment features 228, and the film alignment features 232 are aligned with one another to form a single multi-layer hole 240, as shown in FIG. 3.

The bipolar plate alignment system 210 further includes a plurality of alignment pins 236, as shown in FIGS. 3 and 8. The alignment pins 236 extend through the overlapping holes 227, 230, 234 (i.e., the multi-layer hole 240) formed in each of the plate alignment features 224, the seal alignment features 228, and the film alignment features 232. The alignment pins 236 ensure that the adhesive film 216 and the gasket seal 214 are properly aligned on or with the bipolar plate 212 such that the gasket seal 214 is properly aligned with and inserted into the seal groove 223.

Illustratively, the bipolar plate alignment system 210 includes ten alignment pins 236. In some embodiments, the number of alignment pins 236 may be any number. For example, the number of alignment pins 236 may range from about one (1) alignment pin 236 to about twenty (20) alignment pins 236, including any specific number or range of number of alignment pins 236 comprised therein.

In an exemplary embodiment, the number of the plurality of alignment pins 236 is equal to the number of multi-layer holes 240. In other words, the number of the plurality of alignment pins 236 is equal to the number of the plurality of film alignment features 232, the number of the plurality of seal alignment features 228, and/or the number of the plurality of plate alignment features 224. In other words, in some embodiments, the bipolar plate alignment system 210 includes an alignment pin 236 for each multi-layer hole 240.

The bipolar plate alignment system 210 allows for ease of manufacturing (i.e., attaching, adhering, and/or coupling the gasket seal 214 to the bipolar plate 212). The alignment features 224, 228, 232 allow for continuous production of the bipolar plate alignment system 210 with full automation and minimal to no human interaction and/or involvement.

In some traditional systems may include a human operator and/or an imaging device (i.e., a camera) in addition to a machine, such as a robotic arm, that helps the robotic arm align the gasket seal with the bipolar plate. In some traditional systems, gasket seals are directly molded onto a pretreated bipolar plate. The pretreatment of the bipolar plate includes cleaning of the seal groove with isopropyl alcohol, spraying the non-seal groove portions of the bipolar plate with Teflon, applying glue to the seal groove, and preheating the bipolar plate. The preheated bipolar plate is then moved to an injection molding machine for injection of the gasket seal. After the gasket seal is molded onto the bipolar plate, the bipolar plate and gasket seal combination is cured. After curing, the bipolar plate is moved to a hot table for deflashing of any excess gasket seal from the bipolar plate, and then the bipolar plate is moved for post curing. Overall, the traditional process requires long cycle time, heavy machinery, and high labor demand.

Thus, the bipolar plate alignment system 210 provides for simpler manufacturing without the need for direct injection molding. For example, the gasket seal 214 is positioned on a roll of the adhesive film 216. The adhesive film 216 is then coupled and/or adhered to the gasket seal 214, for example, via a mechanical press, a hot press, a cold press, or any other suitable method. A rolling die may then be used to cut the adhesive film 216 so that it matches the shape of the gasket seal 214, and after cutting, any excess adhesive film 216 may be removed. The adhesive film 216 and the gasket seal 214 may then be attached to the bipolar plate 212 with the aid of the plurality of alignment pins 236.

For example, the bipolar plate 212 may be positioned on a platform with the plurality of alignment pins 236 extending through the holes 227 of the plurality of plate alignment features 224, as shown in FIG. 8. The adhesive film 216 and gasket seal 214 combination may be positioned on top of the bipolar plate 212 so that the plurality of alignment pins 236 extend through the holes 230, 234 of the seal alignment features 228 and the film alignment features 232. The bipolar plate alignment system 210 allows for shorter cycle time, lower labor demand, and lower scrape rate during production. During manufacturing, the plurality of alignment pins 236 may be inserted into each of the holes 227 of the plurality of plate alignment features 224 of the bipolar plate 212. Then, the gasket seal 214 (with the adhesive film 216 attached to the underside thereof) may be placed onto the bipolar plate 212 by the robotic arm or the operator by moving the gasket seal 214 until the gasket seal 214 is appropriately aligned with the bipolar plate 212 such that the plurality of alignment pins 236 extend through the corresponding holes 234 of the plurality of seal alignment features 228 of the gasket seal 214 and the corresponding holes 232 of the plurality of film alignment features 232 of the adhesive film 216. A vacuum may be arranged underneath the bipolar plate 212 that applies suction to force the gasket seal 214 into the seal groove 223 and to ensure a tight seal between the seal groove 223 and the gasket seal 214.

The present systems and methods enable fully automated and/or hands-free coupling of the alignment features 224, 228, 232 and the alignment pins 236, which further allows for alignment of the gasket seal 214 with the bipolar plate 212 without the interaction or involvement of the operator and/or the imaging device to ensure proper alignment. Therefore, the present systems and methods are beneficial and advantageous due to their efficiency and cost-effectiveness over traditional methods that manually and/or robotically align bipolar plates and gasket seals without the use of alignment features.

It will be understood that the bipolar plate 212 is similar on both sides of the bipolar plate 212. The first side 215 of the bipolar plate 212 is shown and described herein. However, an opposite, second side 217 of the bipolar plate 212 is similarly formed to define a seal groove. Another gasket seal and another adhesive film are positioned within the seal groove of the second side 217 of the bipolar plate 212, as described above.

The following described aspects of the present invention are contemplated and nonlimiting:

A first aspect of the present invention relates to a bipolar plate alignment system. The bipolar plate alignment system includes a bipolar plate, a gasket seal, and an adhesive film. The bipolar plate is formed to include a seal groove defined in a first side of the bipolar plate and a plurality of plate alignment features extending outwardly from a perimeter of the bipolar plate. Each of the plurality of plate alignment features is formed to include a hole extending therethrough. The gasket seal is sized to fit within the seal groove of the bipolar plate to seal reactants within an active area of the bipolar plate. The gasket seal is formed to include a plurality of seal alignment features extending outwardly from a perimeter of the gasket seal. Each of the plurality of seal alignment features is formed to include a hole extending therethrough. The adhesive film is coupled to the gasket seal and the seal groove. The adhesive film is formed to include a plurality of film alignment features extending outwardly from a perimeter of the adhesive film. Each of the plurality of film alignment features is formed to include a hole extending therethrough. The hole formed in each of the plurality of plate alignment features is aligned with a respective hole formed in each of the plurality of seal alignment features and with a respective hole formed in each of the plurality of film alignment features so that the gasket seal is properly aligned within the seal groove of the bipolar plate.

A second aspect of the present invention relates to a bipolar plate alignment system. The bipolar plate alignment system includes a bipolar plate, a gasket seal, and a plurality of alignment pins. The bipolar plate is formed to include a seal groove defined in a first side of the bipolar plate and a plurality of plate alignment features extending outwardly from a perimeter of the bipolar plate. Each of the plurality of plate alignment features is formed to include a hole extending therethrough. The gasket seal is sized to fit within the seal groove of the bipolar plate to seal reactants within an active area of the bipolar plate. The gasket seal is formed to include a plurality of seal alignment features extending outwardly from a perimeter of the gasket seal. Each of the plurality of seal alignment features is formed to include a hole extending therethrough. Each of the plurality of alignment pins is configured to extend through a corresponding hole formed in one of the plurality of plate alignment features and a corresponding hole formed in one of the plurality of seal alignment features. The gasket seal is arranged on the bipolar plate so that the hole formed in each of the plurality of plate alignment features is aligned with a respective hole formed in each of the plurality of seal alignment features so that each of the plurality of alignment pins extends through a respective hole of the plurality of plate alignment features and a respective hole of the plurality of seal alignment features to align the gasket seal within the seal groove.

In the first aspect of the present invention, the adhesive film may be adhered to an underside of the gasket seal to locate the adhesive film between the seal groove of the bipolar plate and the gasket seal. In the first aspect of the present invention, each of the plurality of film alignment features may be aligned with a respective one of the plurality of seal alignment features and a respective one of the plurality of plate alignment features.

In the first aspect of the present invention, the perimeter of the bipolar plate may be defined by a first side, a second side opposite the first side, a third side extending between and interconnecting the first side and the second side, and a fourth side opposite the third side and extending between and interconnecting the first side and the second side. In the first aspect of the present invention, the perimeter of the gasket seal may be defined by a first side, a second side opposite the first side of the perimeter of the gasket seal, a third side extending between and interconnecting the first side of the perimeter of the gasket seal and the second side of the perimeter of the gasket seal, and a fourth side opposite the third side of the perimeter of the gasket seal and extending between and interconnecting the first side of the perimeter of the gasket seal and the second side of the perimeter of the gasket seal.

In the first aspect of the present invention, the plurality of seal alignment features may include a first seal alignment feature extending outwardly from the first side of the perimeter of the gasket seal, a second seal alignment feature extending outwardly from the second side of the perimeter of the gasket seal, a third seal alignment feature extending outwardly from the third side of the perimeter of the gasket seal, and a fourth seal alignment feature extending outwardly from the fourth side of the perimeter of the gasket seal.

In the first aspect of the present invention, the plurality of plate alignment features may include a first plate alignment feature extending outwardly from the first side of the perimeter of the bipolar plate, a second plate alignment feature extending outwardly from the second side of the perimeter of the bipolar plate, a third plate alignment feature extending outwardly from the third side of the perimeter of the bipolar plate, and a fourth plate alignment feature extending outwardly from the fourth side of the perimeter of the bipolar plate.

In the first aspect of the present invention, the perimeter of the adhesive film may be defined by a first side, a second side opposite the first side of the perimeter of the adhesive film, a third side extending between and interconnecting the first side of the perimeter of the adhesive film and the second side of the perimeter of the adhesive film, and a fourth side opposite the third side of the perimeter of the adhesive film and extending between and interconnecting the first side of the perimeter of the adhesive film and the second side of the perimeter of the adhesive film. In the first aspect of the present invention, the plurality of film alignment features may include a first film alignment feature extending outwardly from the first side of the perimeter of the adhesive film, a second film alignment feature extending outwardly from the second side of the perimeter of the adhesive film, a third film alignment feature extending outwardly from the third side of the perimeter of the adhesive film, and a fourth film alignment feature extending outwardly from the fourth side of the perimeter of the adhesive film.

In the first aspect of the present invention, the first plate alignment feature may be aligned with the first seal alignment feature and the first film alignment feature, the second plate alignment feature may be aligned with the second seal alignment feature and the second film alignment feature, the third plate alignment feature may be aligned with the third seal alignment feature and the third film alignment feature, and the fourth plate alignment feature may be aligned with the fourth seal alignment feature and the fourth film alignment feature. In the first aspect of the present invention, the bipolar plate alignment system may further comprise a plurality of alignment pins.

In a first aspect of the present invention, the plurality of plate alignment features may further include a fifth plate alignment feature extending outwardly from the first side of the perimeter of the bipolar plate spaced apart from the first plate alignment feature and a sixth plate alignment feature extending outwardly from the second side of the perimeter of the bipolar plate spaced apart from the second plate alignment feature. In a first aspect of the present invention, the plurality of seal alignment features may further include a fifth seal alignment feature extending outwardly from the first side of the perimeter of the gasket seal spaced apart from the first seal alignment feature and a sixth seal alignment feature extending outwardly from the second side of the perimeter of the gasket seal spaced apart from the second seal alignment feature.

In a first aspect of the present invention, the plurality of film alignment features may further include a fifth film alignment feature extending outwardly from the first side of the perimeter of the adhesive film spaced apart from the first film alignment feature and a sixth film alignment feature extending outwardly from the second side of the perimeter of the adhesive film spaced apart from the second film alignment feature. In a first aspect of the present invention, the plurality of plate alignment features may further include a fifth plate alignment feature extending outwardly from the first side of the perimeter of the bipolar plate spaced apart from the first plate alignment feature and a sixth plate alignment feature extending outwardly from the second side of the perimeter of the bipolar plate spaced apart from the second plate alignment feature.

In a first aspect of the present invention, the bipolar plate alignment system may further comprise a plurality of alignment pins. In a first aspect of the present invention, each of the plurality of alignment pins may be configured to extend through a corresponding hole formed in one of the plurality of plate alignment features, a corresponding hole formed in one of the plurality of seal alignment features, and a corresponding hole formed in one of the plurality of film alignment features. In a first aspect of the present invention, each of the plurality of film alignment features may be aligned with a respective one of the plurality of seal alignment features and a respective one of the plurality of plate alignment features.

In the first aspect of the present invention, each of the plurality of alignment pins may be configured to extend through a corresponding hole formed in one of the plurality of plate alignment features, a corresponding hole formed in one of the plurality of seal alignment features, and a corresponding hole formed in one of the plurality of film alignment features.

In the second aspect of the present invention, the bipolar plate alignment system may further comprise an adhesive film attached to an underside of the gasket seal. In the second aspect of the present invention, the adhesive film may be formed to include a plurality of film alignment features extending outwardly from a perimeter of the adhesive film.

In the second aspect of the present invention, each of the plurality of film alignment features may be formed to include a hole extending therethrough. In the second aspect of the present invention, the hole formed in each of the plurality of film alignment features may be aligned with a respective hole formed in each of the plurality of seal alignment features and a respective hole formed in each of the plurality of plate alignment features. In the second aspect of the present invention, each of the plurality of film alignment features may be aligned with a respective one of the plurality of seal alignment features and a respective one of the plurality of plate alignment features.

In the second aspect of the present invention, the perimeter of the bipolar plate may be defined by a first side, a second side opposite the first side, a third side extending between and interconnecting the first side and the second side, and a fourth side opposite the third side and extending between and interconnecting the first side and the second side.

In the second aspect of the present invention, the perimeter of the gasket seal may be defined by a first side, a second side opposite the first side of the perimeter of the gasket seal, a third side extending between and interconnecting the first side of the perimeter of the gasket seal and the second side of the perimeter of the gasket seal, and a fourth side opposite the third side of the perimeter of the gasket seal and extending between and interconnecting the first side of the perimeter of the gasket seal and the second side of the perimeter of the gasket seal.

In the second aspect of the present invention, the plurality of plate alignment features may include a first plate alignment feature extending outwardly from the first side of the perimeter of the bipolar plate, a second plate alignment feature extending outwardly from the second side of the perimeter of the bipolar plate, a third plate alignment feature extending outwardly from the third side of the perimeter of the bipolar plate, and a fourth plate alignment feature extending outwardly from the fourth side of the perimeter of the bipolar plate. In the second aspect of the present invention, the plurality of plate alignment features may further include a fifth plate alignment feature extending outwardly from the first side of the perimeter of the bipolar plate spaced apart from the first plate alignment feature and a sixth plate alignment feature extending outwardly from the second side of the perimeter of the bipolar plate spaced apart from the second plate alignment feature.

In the second aspect of the present invention, the plurality of seal alignment features may include a first seal alignment feature extending outwardly from the first side of the perimeter of the gasket seal, a second seal alignment feature extending outwardly from the second side of the perimeter of the gasket seal, a third seal alignment feature extending outwardly from the third side of the perimeter of the gasket seal, and a fourth seal alignment feature extending outwardly from the fourth side of the perimeter of the gasket seal. In the second aspect of the present invention, the first plate alignment feature may be aligned with the first seal alignment feature, the second plate alignment feature may be aligned with the second seal alignment feature, the third plate alignment feature may be aligned with the third seal alignment feature, and the fourth plate alignment feature may be aligned with the fourth seal alignment feature.

The features illustrated or described in connection with one exemplary embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of' or "consists of' refers to a compound, composition, formulation, or method that excludes the presence of any additional elements, components, or method steps. The term "consisting of' also refers to a compound, composition, formulation, or method of the present disclosure that excludes the presence of any additional elements, components, or method steps.

The phrase "consisting essentially of' or "consists essentially of' refers to a composition, compound, formulation, or method that is inclusive of additional elements, components, or method steps that do not materially affect the characteristic(s) of the composition, compound, formulation, or method. The phrase "consisting essentially of' also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A bipolar plate alignment system comprising:
a bipolar plate formed to include a seal groove defined in a first side of the bipolar plate and a plurality of plate alignment features extending outwardly from a perimeter of the bipolar plate, each of the plurality of plate alignment features is formed to include a hole extending therethrough,
a gasket seal sized to fit within the seal groove of the bipolar plate to seal reactants within an active area of the bipolar plate, the gasket seal formed to include a plurality of seal alignment features extending outwardly from a perimeter of the gasket seal, each of the plurality of seal alignment features is formed to include a hole extending therethrough, and
an adhesive film coupled to the gasket seal and the seal groove, the adhesive film formed to include a plurality of film alignment features extending outwardly from a perimeter of the adhesive film, each of the plurality of film alignment features is formed to include a hole extending therethrough,
wherein the hole formed in each of the plurality of plate alignment features is aligned with a respective hole formed in each of the plurality of seal alignment features and with a respective hole formed in each of the plurality of film alignment features so that the gasket seal is properly aligned within the seal groove of the bipolar plate.

2. The bipolar plate alignment system of claim 1, wherein the adhesive film is adhered to an underside of the gasket seal to locate the adhesive film between the seal groove of the bipolar plate and the gasket seal.

3. The bipolar plate alignment system of claim 1, wherein each of the plurality of film alignment features is aligned with a respective one of the plurality of seal alignment features and a respective one of the plurality of plate alignment features.

4. The bipolar plate alignment system of claim 1, wherein the perimeter of the bipolar plate is defined by a first side, a second side opposite the first side, a third side extending between and interconnecting the first side and the second side, and a fourth side opposite the third side and extending between and interconnecting the first side and the second side, and wherein the perimeter of the gasket seal is defined by a first side, a second side opposite the first side of the perimeter of the gasket seal, a third side extending between and interconnecting the first side of the perimeter of the gasket seal and the second side of the perimeter of the gasket seal, and a fourth side opposite the third side of the perimeter of the gasket seal and extending between and interconnecting the first side of the perimeter of the gasket seal and the second side of the perimeter of the gasket seal.

5. The bipolar plate alignment system of claim 4, wherein the plurality of plate alignment features includes a first plate alignment feature extending outwardly from the first side of the perimeter of the bipolar plate, a second plate alignment feature extending outwardly from the second side of the perimeter of the bipolar plate, a third plate alignment feature extending outwardly from the third side of the perimeter of the bipolar plate, and a fourth plate alignment feature extending outwardly from the fourth side of the perimeter of the bipolar plate.

6. The bipolar plate alignment system of claim 5, wherein the plurality of seal alignment features includes a first seal alignment feature extending outwardly from the first side of the perimeter of the gasket seal, a second seal alignment feature extending outwardly from the second side of the perimeter of the gasket seal, a third seal alignment feature extending outwardly from the third side of the perimeter of the gasket seal, and a fourth seal alignment feature extending outwardly from the fourth side of the perimeter of the gasket seal.

7. The bipolar plate alignment system of claim 6, wherein the perimeter of the adhesive film is defined by a first side, a second side opposite the first side of the perimeter of the adhesive film, a third side extending between and interconnecting the first side of the perimeter of the adhesive film and the second side of the perimeter of the adhesive film, and a fourth side opposite the third side of the perimeter of the adhesive film and extending between and interconnecting the first side of the perimeter of the adhesive film and the second side of the perimeter of the adhesive film.

8. The bipolar plate alignment system of claim 7, wherein the plurality of film alignment features includes a first film alignment feature extending outwardly from the first side of the perimeter of the adhesive film, a second film alignment feature extending outwardly from the second side of the perimeter of the adhesive film, a third film alignment feature extending outwardly from the third side of the perimeter of the adhesive film, and a fourth film alignment feature extending outwardly from the fourth side of the perimeter of the adhesive film.

9. The bipolar plate alignment system of claim 8, wherein the first plate alignment feature is aligned with the first seal alignment feature and the first film alignment feature, the second plate alignment feature is aligned with the second seal alignment feature and the second film alignment feature, the third plate alignment feature is aligned with the third seal alignment feature and the third film alignment feature, and the fourth plate alignment feature is aligned with the fourth seal alignment feature and the fourth film alignment feature.

10. The bipolar plate alignment system of claim 3, further comprising a plurality of alignment pins, each of the plurality of alignment pins is configured to extend through a corresponding hole formed in one of the plurality of plate alignment features, a corresponding hole formed in one of the plurality of seal alignment features, and a corresponding hole formed in one of the plurality of film alignment features.

11. The bipolar plate alignment system of claim 10, wherein the plurality of seal alignment features further includes a fifth seal alignment feature extending outwardly from the first side of the perimeter of the gasket seal spaced apart from the first seal alignment feature and a sixth seal alignment feature extending outwardly from the second side of the perimeter of the gasket seal spaced apart from the second seal alignment feature.

12. The bipolar plate alignment system of claim 11, wherein the plurality of film alignment features further includes a fifth film alignment feature extending outwardly from the first side of the perimeter of the adhesive film spaced apart from the first film alignment feature and a sixth film alignment feature extending outwardly from the second side of the perimeter of the adhesive film spaced apart from the second film alignment feature.

13. The bipolar plate alignment system of claim 5, wherein the plurality of plate alignment features further includes a fifth plate alignment feature extending outwardly from the first side of the perimeter of the bipolar plate spaced apart from the first plate alignment feature and a sixth plate alignment feature extending outwardly from the second side of the perimeter of the bipolar plate spaced apart from the second plate alignment feature.

14. The bipolar plate alignment system of claim 1, further comprising a plurality of alignment pins, each of the plurality of alignment pins is configured to extend through a corresponding hole formed in one of the plurality of plate alignment features, a corresponding hole formed in one of the plurality of seal alignment features, and a corresponding hole formed in one of the plurality of film alignment features.

15. The bipolar plate alignment system of claim 14, wherein each of the plurality of film alignment features is aligned with a respective one of the plurality of seal alignment features and a respective one of the plurality of plate alignment features.
